# EUROPEAN PATENT SPECIFICATION

(11) **EP 2 638 807 B1**
(45) Date of publication and mention of the grant of the patent: **03.03.2021**
(21) Application number: 13172175.5
(22) Date of filing: 16.10.2008
(51) Int. Cl.: C12H 6/02, A23F 3/14

(54) **Beverage compositions**
Getränkzusammensetzungen
Compositions de boisson

(30) Priority: 16.10.2007 US 999243 P
(43) Date of publication of application: 18.09.2013
(62) Divisional of application: 08840240.9
(73) Proprietor: Ganeden Biotech, Inc., Mayfield Heights, OH 44124 (US)
(72) Inventor: Farmer, Sean, Miami Beach, FL Florida 33140 (US)
(74) Representative: FRKelly

(56) References cited:
- EP-A- 1 020 123
- EP-A- 1 344 458
- EP-A- 1 810 579
- WO-A-2005/019417
- WO-A-2005/055934
- WO-A-2005/117926
- WO-A-2006/090729
- WO-A-2007/058027
- WO-A-2008/112296
- CN-A- 1 507 812
- JP-A- 11 169 145
- JP-A- 2000 093 162
- TW-B- 228 974
- US-A1- 2004 175 459
- US-A1- 2007 059 400

## Description

### RELATED APPLICATIONS

This application claims the benefit of U.S.S.N. 60/999,243, filed October 16, 2007.

### FIELD OF THE INVENTION

The present application relates to beverage compositions comprising lactic acid-producing bacteria.

### BACKGROUND OF THE INVENTION

The gastrointestinal microflora plays a number of vital roles in maintaining gastrointestinal tract function and overall physiological health. The growth and metabolism of the many individual bacterial species inhabiting the gastrointestinal tract depend primarily upon the substrates available to them, most of which are derived from the diet. (*See e.g.,* Gibson G.R. et al., 1995. Gastroenterology 106: 975-982; Christl, S.U. et al., 1992. Gut 33: 1234-1238).

WO 2005/117926A1 refers to an agent for intestinal bacterial flora amelioration comprising a tree bark extract as an active ingredient; and food comprising a tree bark extract and at least one member selected from among oligosaccharide, bacillus bifidus and lactobacillus.

JP 2000/093162A discloses a method of obtaining sporogenous lactic acid bacteria at a low cost, having high stability in an acidic aqueous solution and useful for various kinds of food and drink or the like by culturing sporogenous lactic acid bacteria in culture medium having a specific acidic pH value in the initial stage of culture and including a specific content of soybean hydrolysate.

JP 11,169,245 reveals a drink with excellent storage ability obtained by adding *Lactobacillus sporogenes* with a D₁₀₀ value (min) of ≥2.8 (pref. ≥3.0) in its acidic solution of pH 3.5 (*Bacillus coagulans*) at about 10⁸ counts to a drink of pH 3-4 corresponding to a single intake to maintain the bacteria as mature spores without spore germination.

EP 1,819,579 discloses a dry mix thickening system for beverage products prepared with milk. The dry mix composition comprises a buffer, a hydrocolloid, and a chelating agent comprising tetrasodium pyrophosphate.

WO 2005/055934 reveals the utilization of probiotic lactic acid-producing bacteria, e.g. *Bacillus coagulans,* in a nutritional composition for increasing the absorption of carbohydrates within the gastrointestinal tract of a mammal.

Probiotic organisms are non-pathogenic, non-toxigenic, retain viability during storage, and survive passage through the stomach and small intestine. Since probiotics do not generally permanently colonize the host, they need to be ingested regularly for any health promoting properties to persist. These findings have led to attempts to modify the composition and metabolic activities of the bacterial community through diet, primarily with probiotics, which are live microbial food supplements.

### SUMMARY OF THE INVENTION

The invention is directed to the surprising discovery that lactic acid-producing bacteria, particularly *Bacillus* species, remain viable and retain their beneficial probiotic properties in beverage compositions, such as those prepared at high temperatures (*e.g.,* 80, 90, 100, 120, or 150°C) in boiling water. The invention describes spore-containing beverage compositions. Specifically, the invention provides a beverage composition including isolated *Bacillus coagulans* bacteria and one or more non-bacterial ingredients, wherein said one or more non-bacterial ingredients (i) are selected from the group consisting of coffee beans or fragments thereof and coffee powder; or (ii) comprise dehydrated vegetative matter for brewing tea, wherein said *Bacillus coagulans* bacteria comprise at least 85% spores and wherein said *Bacillus coagulans* bacterium comprises GBI-30 strain (ATCC Designation Number PTA-6086).

In a further aspect, the dehydrated vegetative matter is obtained from *Camellia sinensis,* preferably wherein said dehydrated vegetative matter is selected from the group consisting of processed leaves, buds, roots and/or twigs. In a further aspect, the beverage composition is green tea, black tea, oolong tea, yellow tea, or white tea, preferably wherein said beverage composition is instant tea or brewable tea, optionally decaffeinated tea.

Alternatively, the dehydrated vegetative matter is obtained from a species other than *Camellia sinensis* preferably wherein said beverage composition is herbal tea, more preferably rosehip tea, chamomile tea, jiaogulan tea, ginger tea, peppermint tea, lemongrass tea, ginseng tea, and rooibos tea.

The isolated *Bacillus coagulans* may comprise between about 0.1% to about 50% by weight of the beverage composition. Preferably, the isolated *Bacillus coagulans* comprise between about 1% and about 10% by weight of the beverage composition. Most preferably, the amount of *Bacillus coagulans* bacteria is about 10⁹ colony forming units (CFU) of bacteria per tea bag (about 50 mg of bacteria per tea bag in about 2-3 grams of tea).

The *Bacillus coagulans* bacteria included in the beverage compositions of this invention include the *Bacillus coagulans* strain GBI-30, ATCC Designation Number PTA-6086; see U.S. Patent No. 6,849,256 to Farmer.

Preferably, the isolated *Bacillus coagulans* is in the form of a spore. The invention provides for the activation of *Bacillus coagulans* spores upon contacting hot liquid, preferably hot water. In a further aspect, preparing the beverage composition comprises combining the Bacillus coagulans bacteria and the one or more non-bacterial ingredients with hot water. In yet another aspect, said hot water comprises boiling water.

In one aspect, the isolated *Bacillus coagulans* bacteria are in the form of a spore, in the form of a vegetative cell or in the form of a mixture of vegetative cells and spores.

The invention also discloses beverage compositions as defined above including an isolated *Bacillus coagulans* bacterium and one or more non-bacterial ingredients, such as coffee beans or fragments thereof, coffee powder, chocolate powder, and cocoa powder. According to another aspect, the coffee beans or fragments thereof comprise ground coffee beans. Exemplary beverage compositions include coffee. In a further aspect, the beverage composition is instant coffee or brewable coffee, wherein said beverage composition is optionally decaffeinated coffee. In a further aspect, *Bacillus coagulans* bacteria in the form of spray-dried powder are added directly to said one or more non-bacterial ingredient. According to another aspect, the isolated *Bacillus coagulans* bacteria are in the form of a powder, a dried cell mass, a stabilized paste or a stabilized gel. In a further aspect, the non-bacterial ingredient as mentioned above is coated or sprayed with *Bacillus coagulans* spores, or freeze-dried *Bacillus coagulans* vegetative cells. In yet another aspect, the non-bacterial ingredient is coated or sprayed with lyophilized, spray-dried, air-dried or frozen *Bacillus coagulans.*

The *Bacillus coagulans* Hammer strains as described herein are non-pathogenic and generally regarded as safe for use in human nutrition (*i.e.,* GRAS classification) by the U.S. Federal Drug Administration (FDA) and the U.S. Department of Agriculture (USDA), and by those skilled in the art. Furthermore, the *Bacillus coagulans* Hammer strains as described herein germinate at or below human body temperature, rendering them useful as probiotics. Many *Bacillus coagulans* strains outside the Hammer group have mostly industrial applications, little or no nutritional benefit, and environmental contaminants that have not been evaluated for safety. Moreover, many other non-Hammer strains of *Bacillus coagulans* grow optimally at temperatures that exceed human body temperature and, thus, do not germinate efficiently in the human body. Such strains are less or not suitable as probiotics for human consumption.

### BRIEF DESCRIPTION OF THE DRAWINGS

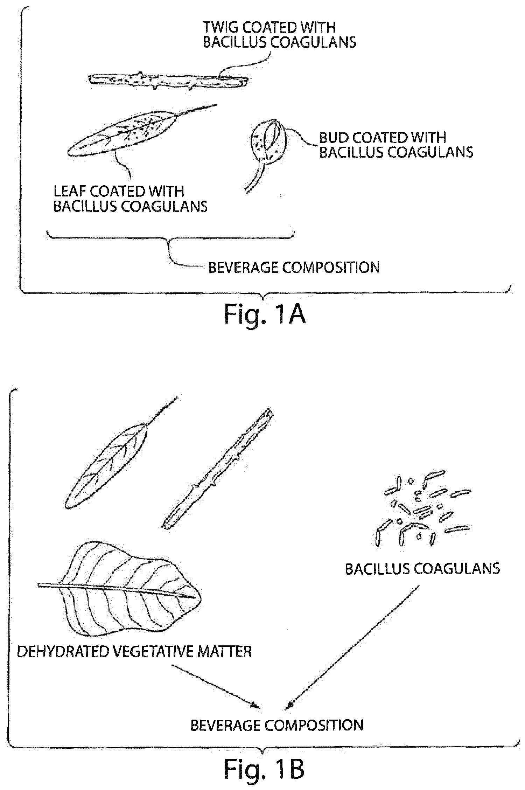

Figure 1A is a drawing demonstrating that tea leaves or other dehydrated vegetative matter is coated or sprayed with spores or freeze-dried *Bacillus coagulans* vegetative cells.
Figure 1B is a drawing illustrating that the *Bacillus* bacterium is added to the beverage composition separate from or along with the dehydrated vegetative matter or non-bacterial ingredient.

### DETAILED DESCRIPTION OF THE INVENTION

The present invention is directed to the discovery that non-pathogenic lactic acid-producing bacteria (*i.e.,* "lactic acid bacteria"), such as the exemplary *Bacillus coagulans,* remain viable and retain their beneficial probiotic properties in beverage compositions, such as those prepared in boiling water.

### Probiotic Lactic Acid-Producing Bacteria

A probiotic lactic acid-producing bacteria suitable for use in the methods and compositions of the invention as defined for use in the present invention produces acid and is non-pathogenic. There are many suitable bacteria identified as described herein, although the invention is not limited to currently known bacterial species insofar as the purposes and objectives of the bacteria is described. The property of acid production is important to the effectiveness of the probiotic lactic acid-producing bacteria of this invention.

The invention provides using a lactic acid-producing bacteria, such as a spore-forming *Bacillus* species, such as *B. coagulans.* Preferably, the spore-forming *Bacillus* species of the invention is *B. coagulans* Hammer.

Exemplary methods and compositions are described herein using *Bacillus coagulans* as a probiotic. Purified and/or isolated *Bacillus coagulans* is particularly useful as a probiotic in beverage compositions. Probiotic *B. coagulans* is non-pathogenic and is generally regarded as safe (*i.e.,* GRAS classification) by the U.S. Federal Drug Administration (FDA) and the U.S. Department of Agriculture (USDA), and by those skilled in the art.

*Bacillus coagulans* is a non-pathogenic gram positive spore-forming bacteria that produces L(+) lactic acid (dextrorotatory) in fermentation conditions. It has been isolated from natural sources, such as heat-treated soil samples inoculated into nutrient medium (Bergey's Manual off Systemic Bacteriology, Vol. 2, Sneath, P.H.A., et al., eds., Williams & Wilkins, Baltimore, MD, 1986). Purified *B. coagulans* strains have served as a source of enzymes including endonucleases (*e.g.,* U.S. Patent No. 5,200,336); amylase (U.S. Patent No. 4,980,180); lactase (U.S. Patent No. 4,323,651); and cyclo-malto-dextrin glucano-transferase (U.S. Patent No. 5,102,800). *B. coagulans* has been used to produce lactic acid (U.S. Patent No. 5,079,164). A strain of *B. coagulans* (referred to as *L. sporogenes;* Sakaguti & Nakayama (ATCC 31284)) has been combined with other lactic acid producing bacteria and *B. natto* to produce a fermented food product from steamed soybeans (U.S. Patent No. 4,110,477).

The present invention specifically relates to *Bacillus coagulans* strain GBI-30, ATCC Designation Number PTA-6086. Further described are bacterial species including *Bacillus coagulans, e.g., Bacillus coagulans* hammer, preferably *Bacillus coagulans* hammer strain Accession No. ATCC 31284, or one or more strains derived from *Bacillus coagulans* hammer strain Accession No. ATCC 31284 (*e.g.,* ATCC Numbers: GBI-20, ATCC Designation Number PTA-6085;; and GBI-40, ATCC Designation Number PTA-6087; see U.S. Patent No. 6,849,256 to Farmer).

*Bacillus coagulans* was previously mis-characterized as a *Lactobacillus* and labeled as *Lactobacillus sporogenes* (See Nakamura et al. 1988. Int. J. Syst. Bacteriol. 38: 63-73). However, initial classification was incorrect because *Bacillus coagulans* produces spores and excretes L(+)-lactic acid through metabolism. Both of these characteristics provide key features to the utility of *Bacillus coagulans.* These developmental and metabolic aspects required that the bacterium be classified as a lactic acid *Bacillus.* In addition, it is not generally appreciated that classic *Lactobacillus* species are unsuitable for colonization of the gut due to their instability in the harsh *(i.e.,* acidic) pH environment of the bile, particularly human bile. By contrast, *Bacillus coagulans* is able to survive and colonize the gastrointestinal tract in the bile environment and even grown in this low pH range.

### Probiotic Activity of Bacillus coagulans

It is well-documented clinically that many species of bacterial, mycotic and yeast pathogens possess the ability to cause a variety of gastrointestinal disorders including, but not limited to: disruption of normal gastrointestinal biochemical function, necrosis of gastrointestinal tissues, and disruption of the bioabsorption of nutrients, and like conditions. The probiotic microorganism-containing compositions described herein inhibit these pathogens. Thus, the compositions are useful in the prophylactic or therapeutic treatment of conditions associated with infection by these aforementioned pathogens.

In one aspect, a *Bacillus coagulans* strain is included in the composition in the form of vegetative cells. Preferably, the *Bacillus coagulans* strain is included in the composition in the form of spores. The invention also provides for including the *Bacillus coagulans* strain in the composition in the form of a powder, a dried cell mass, a stabilized paste, or a stabilized gel.

Because *Bacillus* spores are heat and pressure-resistant and can be stored as a dry powder, they are particularly useful for formulation into and manufacture of products such as the various beverage compositions described herein. A *Bacillus* species is well suited for the present invention, particularly species having the ability to form spores which are relatively resistant to heat and other conditions, making them ideal for long storage (shelf- life) in product formulations.

The *Bacillus coagulans* in the described compositions survives storage (shelf-life) from about 12 days to about 5 years; from about 1 month to about 18 months; from about 3 months to about 1 year; or from about 6 months to about 9 months. For example, at least 50, 65, 75, 90, 95, or 99% of the spores germinate following hot beverage preparation after prolonged (*e.g.,* 2 year) storage period.

### Anti-microbial Probiotic Activity

The ability of *Bacillus coagulans* to inhibit various bacterial pathogens was quantitatively ascertained by use of an *in vitro* assay. This assay is part of a standardized bacterial pathogen screen (developed by the U.S. Food and Drug Administration (FDA)) and is commercially available on solid support disks (DIFCO® BACTROL® Antibiotic Disks). To perform the assay, potato-dextrose plates (DIFCO®) were initially prepared using standard procedures. The plates were then individually inoculated with the bacteria (approximately 1.5x10⁶ CFU) to be tested so as to form a confluent bacterial bed.

Inhibition of microorganisms (*e.g.* gastrointestinal pathogens) by *Bacillus coagulans* was subsequently ascertained by placing approximately 1.8 x 10⁶ CFU of *Bacillus coagulans* in 10 µl of broth or buffer, directly in the center of the potato-dextrose plate with one test locus being approximately 8 mm in diameter per plate. A minimum of three test loci were used for each assay. The negative control consisted of a 10 µl volume of a sterile saline solution, whereas the positive control consisted of a 1 µl volume of glutaraldehyde. The plates were then incubated for approximately about 18 h at 30°C, at which time the zones of inhibition were measured. As designated herein, "excellent inhibition" means the zone was 10 mm or greater in diameter; and "good inhibition" means the zone was greater than 2 mm in diameter but less than 10 mm in diameter.

As expected, no "inhibition" was seen with the negative, saline control, and excellent "inhibition" (approximately 16.2 mm diameter; average of three tests) was seen with the positive, glutaraldehyde control. For the enteric microorganisms tested, the following inhibition by *Bacillus coagulans* was found: (*i*) *Clostridium* species - excellent inhibition; (*ii*) *Escherichia coli* - excellent inhibition; (*iii*) *Clostridium* species - excellent inhibition, where the zone of inhibition was consistently greater than 15 mm in diameter. Similarly, excellent inhibition was also seen for the opportunistic pathogens *Pseudornonas aeruginosa,* and *Staphylococcus aureus.* Pathogenic enteric bacteria which were inhibited by *Bacillus coagulans* activity include, but are not limited to: *Staphylococcus aureus; Staphylococcus epidermidis; Streptococcus pyogenes; Pseudomonas aeruginosa; Escherichia coli* (enterohemorragic species); numerous *Clostridium* species (*e.g., Clostridium perfingens, Clostridium botulinum, Clostridium tributrycum, Clostridium sporogenes,* and the like); *Gardnereia vaginails; Proponbacterium aenes; Aeromonas hydrophia; Aspergillus* species; *Proteus* species; and *Klebsiella* species.

### Probiotic Beverage Compositions

The invention is directed to the surprising discovery that lactic acid-producing bacteria, particularly *Bacillus* species, remain viable and retain their beneficial probiotic properties in beverages compositions, such as those prepared in boiling water. The beverages are prepared by combining dry matter and a liquid, *e.g.,* water. In one aspect, the beverages are prepared by combining dry matter and a liquid, and heating the resulting combination. Optionally, the combination is heated using applied heat, a flame, or a microwave. Preferably, boiling water (about 100°C) is added to a combination of tea and *Bacillus coagulans* bacteria in a tea bag and is steeped for about four minutes. In another aspect, hot water is passed through the combination of coffee and *Bacillus coagulans* bacteria.

The compositions are formulated in many configurations, because the bacterium is present as a vegetative cell or as a spore, or both, depending on the species and form of the probiotic organism. The cells/spores are formulated in a variety of compositions suited for use in a beverage composition. In one aspect, the bacterium is present as a mixture of spores and vegetative cells comprising at least 85% spores. Preferably, the bacterium is present as at least 90% spores, *e.g.,* 95%, 98%, or 99% spores. Optionally, prior to addition to the beverage compositions of the invention, the *Bacillus coagulans* cells are cultured in liquid in the absence of or with limited quantities of a food source to induce sporulation. Heat gun spray drying kills about 50%, about 75%, about 90%, about 95%, or about 99% of vegetative cells prior to addition to the beverage compositions of the invention.

Preferably, the beverage composition is a tea. Tea is a beverage made by steeping dehydrated vegetative matter such as processed leaves, buds, roots or twigs of the tea bush, *Camellia sinensis,* in hot water for a few minutes. The invention provides a dehydrated tea base, *e.g.,* black tea, oolong tea, green tea, yellow tea, and white tea and a *Bacillus coagulans.* Optionally, the tea is instant tea or brewable tea. In one aspect, the tea is decaffeinated tea. In the case of instant tea, the composition includes a concentrate or dehydrate of brewed tea and *Bacillus coagulans.* Such a formulation typically does not contain vegetative matter.

Also encompassed by the invention are blends of tea. Many blends of tea are prepared by adding other plants to a tea (black, oolong, green, yellow or white tea); for example, the popular Earl Grey tea is black tea with bergamot, while Jasmine tea is Chinese tea with Jasmine.

The invention also provides herbal "tea" beverage compositions. An herb is characterized as a small, seed bearing plant with fleshy, rather than woody, parts (from which we get the term "herbaceous"). In addition to herbaceous perennials, herbs include trees, shrubs, annuals, vines, and more primitive plants, such as ferns, mosses, algae, lichens, and fungi. They [herbs] are valued for their flavor, fragrance, medicinal and healthful qualities, economic and industrial uses, pesticidal properties, and coloring materials (dyes). A tisane, ptisan or herbal "tea" is any infusion of vegetative matter other than from the tea bush (*Camellia sinensis*). Herbal "tea" can be made with fresh or dried flowers, fruit, leaves, seeds or roots, generally by pouring boiling water over the plant parts and letting them steep for a few minutes. Herbal "tea" can be made with dried leaves, flowers, fruit, or seeds of a medicinal plant. Seeds and roots can also be boiled on a stove or microwaved. The herbal "tea" is then strained, sweetened if so desired, and served. Suitable herbal teas include Anise tea, roasted barley tea, Bissap tea, Cannabis tea, Catnip tea, Cerasse tea, Chamomile tea, Chrysanthemum tea (made from dried flowers), Citrus peel tea (including bergamot, lemon and orange peel), roasted corn tea, Echinacea tea, Essiac tea (a blended herbal tea), Fennel tea, Gentian tea, Ginger root tea, Ginseng tea, Greek Mountain Tea (made from a variety of the *Sideritis syriaca* plant), Hibiscus tea (often blended with rose hip), Honeybush tea, Horehound tea, Jiaogulan tea, Kava root tea, Labrador tea, Lapacho tea, Lemon grass tea, Licorice root tea, Lime blossom tea, Lotus flower tea, Mate tea, *Mate de coca* tea, Mint tea, European mistletoe tea, Neem leaf tea, Nettle leaf tea, Red raspberry leaf tea, Toasted rice tea, Rooibos (Red Bush or red) tea, Rose hip tea (often blended with hibiscus), Rosemary tea, Sage tea, Sassafras tea, Skullcap tea, Staghorn Sumac tea, Stevia tea, Thyme tea, Tulsi tea, Uncaria tomentosa tea (Cats Claw), Valerian tea, Vervain tea, Vetiver tea, Roasted wheat tea, Wong Logat tea, Woodruff tea, Yarrow tea, Yuen Kut Lam Kam Wo Tea, and Tan Ngan Lo Medicated Tea.

The invention also discloses compositions comprising isolated *Bacillus coagulans* and one or more non-bacterial ingredients in a tea bag. In one aspect, the non-bacterial ingredients comprise dehydrated vegetative matter obtained from *Camellia sinensis,* wherein said dehydrated matter is selected from the group consisting of processed leaves, buds, roots, and/or twigs.

Also disclosed herein are tea bags. Suitable tea bags include those of a porous silk, paper, cotton, or nylon bag with tea inside that is used for brewing tea. The tea bag consists of two parts, the tea and the bag. The tea remains inside the bag as the tea is brewed, making it easier to dispose of. Preferably, *Bacillus coagulans* bacteria in the form of a spray-dried powder is included in or on the surface of the tea bag along with the dehydrated vegetative matter. Alternatively, *Bacillus coagulans* bacteria in the form of spray-dried powder is included in or on the surface of a pouch along with the dehydrated vegetative matter. It is further disclosed that maltodextrin may be included in or on the surface of the pouch along with the *Bacillus coagulans* bacteria. Maltodextrin can also be included in or on the surface of the pouch along with the *Bacillus coagulans* bacteria with dehydrated vegetative matter. About 1 billion *Bacillus coagulans* bacteria in the form of spray-dried powder are described as being included in or on the surface of a pouch with dehydrated vegetative matter.

In another aspect, the invention provides beverage compositions including isolated *Bacillus coagulans* bacteria and one or more non-bacterial ingredients, wherein said one or more non-bacterial ingredients (i) are selected from the group consisting of coffee beans or fragments thereof and coffee powder; or (ii) comprise dehydrated vegetative matter for brewing tea, wherein said *Bacillus coagulans* bacteria comprises at least 85% spores and wherein said *Bacillus coagulans* bacterium comprises GBI-30 strain (ATCC Designation Number PTA-6086). Suitable non-bacterial ingredients include coffee beans or fragments thereof, and coffee powder. Exemplary beverage compositions include coffee. Optionally, the coffee is instant coffee or brewable coffee. In one aspect, the coffee is decaffeinated coffee. Also described are other suitable non-bacterial ingredients such as dairy products, non-dairy creamers, flavored creamers, flavor extract, natural sweeteners (*e.g.,* Stevia), and artificial sweeteners such as Splenda, Sweet'N Low. In one aspect, *Bacillus coagulans* bacteria in the form of spray-dried powder are added directly to the one or more non-bacterial ingredients (*e.g.* ground coffee beans or freeze-dried brewed coffee crystals or powder) itself.

The invention also discloses beverage compositions including isolated *Bacillus coagulans* in cold remedies that require hot water, such as TheraFlu™. *Bacillus coagulans* bacteria in the form of spray-dried powder is added prior to or subsequent to addition of the cold remedy powder (*e.g.,* Theraflu™) to hot water. Alternatively, *B. coagulans* is mixed or interspersed with dry ingredients of the cold remedy ingredients.

In one aspect, the *Bacillus coagulans* bacterium is applied directly to the dehydrated vegetative matter or non-bacterial ingredient, *e.g.* tea leaves or other dehydrated vegetative matter is coated or sprayed with spores or freeze-dried *Bacillus coagulans* vegetative cells (Figure 1A). In another aspect, the *Bacillus* bacterium is added to the beverage composition separate from or along with the dehydrated vegetative matter or non-bacterial ingredient, *e.g.* the beverage composition is a mixture of two or more distinct moieties, a first moiety being dehydrated vegetative matter and a second moiety being or containing a *Bacillus coagulans* bacterium or spore (in the absence of a dehydrated vegetative matter) (Figure 1B). In the latter case, the beverage composition is a mixture of two or more different entities or particles. The *Bacillus coagulans* portion of the mixture is optionally an encapsulated or microencapsulated dried bacterial mass, or spores, or a particle-containing mixture of *Bacillus coagulans* and spores.

Optionally, the isolated *Bacillus coagulans* is in the form of a spore. The isolated *Bacillus coagulans* are at least 85%, at least 90%, or at least 95% pure spores. Alternatively, the isolated *Bacillus coagulans* is in the form of a vegetative cell. The isolated *Bacillus coagulans* can be at least 85%, at least 90%, or at least 95% pure vegetative cells. In another aspect, the isolated *Bacillus coagulans* is in the form of a mixture of vegetative cells and spores. The *Bacillus coagulans* mixture may be 90% spores, 10% vegetative cells. Further described are 75% spores, 25% vegetative cells; 60% spores, 40% vegetative cells; 50% spores, 50% vegetative cells; 60% vegetative cells, 40% spores; 75% vegetative cells; 25% spores; or 90% vegetative cells, 10% spores.

The *Bacillus* and/or *Bacillus coagulans* isolated active agent is applied using any of a variety of known methods including, for example, applying a powder, spray-drying the probiotic onto the tea bag or coffee beans, or soaking the tea bag or coffee beans in a solution containing the probiotic. Optionally, the *Bacillus* bacterium is applied prior to making the tea bag. Alternatively, the *Bacillus* bacterium is applied during or after the tea bag has been made. In another aspect, *Bacillus coagulans* bacteria in the form of spray-dried powder is added directly to the tea itself. Optionally, about 70 mg per serving unit of *Bacillus coagulans* bacteria in the form of spray-dried powder is added directly to the tea itself. It is further described that maltodextrin along with *Bacillus coagulans* bacteria in the form of spray-dried powder can be added directly to the tea itself. Optionally, about 1 billion per serving unit *Bacillus coagulans* bacteria in the form of spray-dried powder along with maltodextrin is added directly to the tea itself.

Any of a variety of methods for placing the bacterial composition into a beverage composition can be used. However, preferred methods include a "spray-dry" method in which the tea bag or coffee beans are exposed in a low humidity chamber to an atomized mix containing a liquid composition, where the chamber is subsequently exposed to approximately 27-43 °C (80-110°F) to dry the liquid, thereby impregnating the material of the tea bag or coffee beans with the components of the composition.

A typical concentration is from approximately 1x10⁷ to 1x10¹² CFU; 1x10⁸ to 1x10¹¹ CFU; or 1x10⁹ to 1x10¹⁰ CFU of viable bacterium or spores/in² of external surface of tea bag. Following drying, the tea bag is ready for immediate use or for storage in a sterile package.

The active ingredients (*i.e.,* live bacteria or extracellular components), comprise between about 0.01% to about 10%; 0.01% to about 1%; or about 0.05% to about 0.1% by weight of the beverage composition. Optionally, the isolated *Bacillus coagulans* comprise about 1 mg to about 10 g; about 10 mg to about 1 g; or about 25 mg to about 75 mg by weight of the beverage composition. Most preferably, the amount of *Bacillus coagulans* bacteria is about 10⁹ colony forming units (CFU) of bacteria per tea bag (about 50 mg of bacteria per tea bag in about 2-3 grams of tea).

Exemplarily, the amount of bacteria is about 10⁴ to 10¹⁴ colony forming units (CFU) of bacteria per gram of beverage composition (*i.e.,* vegetative cells and/or bacterial spores), preferably 10⁵ to 10¹³ CFU/g. More preferably, the concentrations are 10⁸ to 10¹³ CFU/g; 10⁹ to 10¹² CFU/g; or 10¹⁰ to 10¹¹ CFU/g. Alternatively, the amount of bacteria is about 1 x 10⁶ CFU per beverage composition. The actual amount in a composition will vary depending upon the amounts of composition to be dispersed into the beverage composition and upon routes of dispersal.

The invention further describes storage of the tea bag in a sterile package at room temperature prior to consumption. Alternatively, the tea bag is used immediately.

The beverage composition can comprise at least 85%, at least 90%, at least 95% or 100% isolated *Bacillus coagulans* spores.

By way of example, and not of limitation, *Bacillus coagulans* spores may be incorporated into any type of dry or lyophilized product which is dissolved or mixed with hot water, so long as the temperature of the *Bacillus coagulans* spore-containing mixture is raised to the required heat-shock temperature (*i.e.,* 80°C for 5 minutes) necessary for germination of the spores. The *Bacillus coagulans* spores may either be incorporated into the dry or lyophilized product by the manufacturer of the product or by the consumer during preparation. These dry or lyophilized products include, but are not limited to: tea bags, coffee (*e.g.,* "freeze-dried" or ground), hot beverage condiments/flavorings and creamers, and the like.

### Example 1: Preparation of Bacillus coagulans cultures

*Bacillus coagulans Hammer* bacteria (ATCC Accession No. 31284) was inoculated and grown to a cell density of about 10⁸ to 10⁹ cells/ml in nutrient broth containing 5 g Peptone, 3 g Meat extract, 10-30 mg MnSO₄, and 1,000 ml distilled water, adjusted to pH 7.0, using a standard airlift fermentation vessel at 30°C. The range of MnSO₄ acceptable for sporulation is 1 mg/l to 1 g/l. The vegetative cells can actively reproduce up to 45°C, and the spores are stable up to 90°C. After fermentation, the *B. coagulans* bacterial cells or spores are collected using standard methods (*e.g.,* filtration, centrifugation) and the collected cells and spores can be lyophilized, spray-dried, air-dried or frozen. As described herein, the supernatant from the cell culture is collected and used as an extracellular agent secreted by *B. coagulans.*

A typical yield from the above culture is in the range of about 10⁹ to 10¹⁰ viable spores and more typically about 100 to 150 billion cells/spores per gram before drying. Spores maintain at least 90% viability after drying when stored at room temperature for up to ten years, and thus the effective shelf life of a composition containing *B. coagulans* Hammer spores at room temperature is about 10 years.

### Example 2: Preparation of Bacillus coagulans spores

A culture of dried *B. coagulans* spores was prepared as follows. Ten million spores were inoculated into a one liter culture containing 24 g potato dextrose broth, 10g of enzymic-digest of poultry and fish tissue, 5 g of FOS and 10g MnSO4. The culture was maintained for 72 hours under a high oxygen environment at 37°C to produce culture having about 150 billion cells per gram of culture. Thereafter, the culture was filtered to remove culture medium liquid, and the bacterial pellet was resuspended in water and freeze-dried. The freeze-dried powder is then ground to a fine powder using standard good manufacturing practice (GMP).

### Example 3: Bacillus coagulans spore survival

This study was performed in order to determine the survivability rate of *Bacillus coagulans* spores as they pass through the stomach. Samples of *Bacillus coagulans* spores were subjected to a simulated gastric environment for varying lengths of time in order to attain their survivability rate. First, a homogeneous sample of raw material *Bacillus coagulans* of at least 12 grams was prepared. Saline solution at pH 1 was prepared using 3N HCl (150 ml each into six 250 ml media bottles) and sterilized. Additional saline solutions with pH 2 and 3 were prepared similarly, resulting in 6 sterile 250 ml bottles, each containing 150 ml pH adjusted saline. Six sterile 250 ml media bottles each containing 150 ml normal saline solution were prepared and sterilized. Phosphate buffer (∼400 ml) was prepared at pH 7.2. Test tubes (24) were prepared and sterilized, each containing 9 ml of phosphate buffer pH 7.2. Test tubes (120) were prepared, each containing 9 ml of normal saline. GYE agar medium was prepared and sterilized and cooled to 45°C in a water bath. Samples (24) of raw material were weighed, each ∼ 500 milligrams (equivalent to 10 billion spores). The samples were added to media bottles at 37°C and incubated half for 20 minutes the other half for 120 minutes. After 20 and 120 minutes incubation, respectively, the samples were mixed to uniformity and pipet 1 ml into 9 ml of sterile phosphate buffer pH 7.2. After all 12 samples from each time point were placed into test tubes containing sterile phosphate buffer, serial dilutions were made until 6 tubes had been used for each sample. The final dilution for the final two test tubes were 3 x 10⁷ and 3 x 10⁸, which gave a count of roughly 300 and 30 CFU, respectively. The final 2 test tubes from each sample were placed into 70°C water bath for 30 minutes. After 30 minutes, they were cooled immediately to 45°C. Three sterile petri plates per tube were set out. 1.0 ml from the heat-treated tube was added into each petri plate, then 15 ml of sterile molten GYE Agar medium (at 45°C) was poured into each of the petri plates and mixed thoroughly. When solidified, the plates were incubated in an inverted position for 48 hours at 40°C. The individual colonies were counted. Results were expressed as CFU per gram as shown in the table below. 1.0E+10 = 1.0 x 10¹⁰

**Table 1.**

| Sample | 20 Minutes Incubation Spore Count, CFU/gram | 120 Minutes Incubation Spore Count, CFU/gram |
|---|---|---|
| Normal Saline - A | 1.90E+10 | 1.88E+10 |
| Normal Saline - B | 2.12E+10 | 2.00E+10 |
| Normal Saline - C | 1.64E+10 | 2.06E+10 |
| Average | 1.89E+10 | 1.98E+10 |
| | | |
| Saline pH 1.0 - D | 2.08E+09 | 5.98E+07 |
| Saline pH 1.0 - E | 1.47E+09 | 0.00E+00 |
| Saline pH 1.0 - F | 3.59E+09 | 0.00E+00 |
| Average | 2.38E+09 | 1.99E+07 |
| | | |
| Saline pH 2.0 - G | 3.63E+09 | 3.46E+09 |
| Saline pH 2.0 - H | 4.47E+09 | 2.48E+09 |
| Saline pH 2.0 -I | 3.58E+09 | 2.82E+09 |
| Average | 3.89E+09 | 2.92E+09 |
| | | |
| Saline pH 3.0 - J | 1.65E+10 | 1.13E+10 |
| Saline pH 3.0 - K | 1.35E+10 | 1.11E+10 |
| Saline pH 3.0 - L | 1.80E+10 | 1.39E+10 |
| Average | 1.60E+10 | 1.21E+10 |

### Example 4: Bacillus coagulans spore shock survival test

The purpose of the following study was to determine the survivability rate of GBI-30 (*Bacillus coagulans*-30*;* BC³⁰) after steeping with tea for 5 minutes followed by subjection to a simulated gastric environment (*e.g.,* pH 2.0) for 2 hours. Samples of GBI-30 were placed in boiling water along with a tea bag (Celestial Seasonings®- Authentic Green Tea), and steeped for 5 minutes. They were then subjected to a simulated gastric environment for 2 hours in order to determine their survivability rate. The results are detailed below.

One liter of saline solution (pH 2.0 using 3N HCl) and 150 ml of normal saline solution was prepared. Saline solution (90 mls; pH 2.0) was placed into each of six 250 ml media bottles and sterilized. About 100 ml phosphate buffer (pH 7.2) was prepared. Test tubes (3) containing 9 ml of phosphate buffer (pH 7.2) were prepared and sterilized. Nine test tubes containing 9 ml of normal saline were prepared and sterilized. Sterile GYE agar medium was prepared and cooled to 45°C in a water bath. Three samples of raw material (16 billion/gram), were weighed (each ∼ 62.5 milligrams; GBI-30).

Six samples were prepared as follows. Drinking water was boiled and 200 ml boiling water was poured into a 400 ml beaker which contained 1 teabag and ∼62.5 mg raw material (GBI-30). The teabag was steep for 5 minutes. The teabag was removed and the solution was mixed well and 10 ml was placed into 90 ml of saline solution (pH 2.0). The samples incubated for 2 hours at 37°C. The solution was then mixed to uniformity and 1 ml was placed into 9 ml of sterile phosphate buffer (pH 7.2). Three serial dilutions of 1 ml into 9 ml of sterile saline solution were prepared. The final count was about 5 x 10¹ (50 CFU). The final 3 test tubes from each sample were plated. The individual colonies were counted. The results of this experiment are listed in the chart below. These data indicate that *Bacillus coagulans* spores survive in the gastric environment after consumption of the beverage compositions described herein.

**Table 2.**

| 2 hrs @37°C | Spore Count, CFU Total | Survival Rate |
|---|---|---|
| 1 | 1.44E+08 | 13.0% |
| 2 | 1.84E+08 | 17.2% |
| 3 | 2.16E+08 | 20.9% |
| | 1.81E+08 | 17.0% |

In another set of experiments, tea bags containing GBI-30 were placed into boiling water and the tea was steeped for four minutes. Cell counts were performed. About 65% of the *Bacillus coagulans* bacteria survived. These data indicate that *Bacillus coagulans* spores retain viability in the beverage compositions described herein.

## Claims

1. A beverage composition comprising isolated *Bacillus coagulans* bacteria and one or more non-bacterial ingredients, wherein said one or more non-bacterial ingredients
(i) are selected from the group consisting of coffee beans or fragments thereof and coffee powder; or
(ii) comprise dehydrated vegetative matter for brewing tea,
wherein said *Bacillus coagulans* bacteria comprise at least 85% spores and wherein said *Bacillus coagulans* bacterium comprises GBI-30 strain (ATCC Designation Number PTA-6086).

2. The beverage composition of claim 1, wherein said isolated *Bacillus coagulans* bacteria are in the form of a spore, in the form of a vegetative cell, or in the form of a mixture of vegetative cells and spores.

3. The beverage composition of claim 1, wherein said isolated *Bacillus coagulans* bacteria are in the form of a powder, a dried cell mass, a stabilized paste or a stabilized gel.

4. The beverage composition of claim 1, wherein said non-bacterial ingredient is coated or sprayed with *Bacillus coagulans* spores or freeze-dried *Bacillus coagulans* vegetative cells.

5. The dehydrated beverage composition of claim 1, wherein said non-bacterial ingredient is coated or sprayed with lyophilized, spray-dried, air-dried or frozen *Bacillus coagulans* spores.

6. The beverage composition of claim 1, wherein *Bacillus coagulans* bacteria in the form of a spray-dried powder are added directly to said one or more non-bacterial ingredients.

7. The beverage composition of claim 1 (i), wherein said beverage composition is coffee.

8. The beverage composition of claim 7, wherein said beverage composition is instant coffee or brewable coffee, and wherein said beverage composition is optionally decaffeinated coffee.

9. The beverage composition of claim 1, wherein said *Bacillus coagulans* spores activate upon contacting hot liquid, preferably hot water.

10. The beverage composition of claim 1, wherein said dehydrated vegetative matter is obtained from *Camellia sinensis,* preferably wherein said dehydrated vegetative matter is selected from the group consisting of processed leaves, buds, roots and twigs.

11. The beverage composition of claim 10, wherein said beverage composition is green tea, black tea, oolong tea, yellow tea, or white tea, preferably wherein said beverage composition is instant tea or brewable tea, optionally decaffeinated tea.

12. The beverage composition of claim 1, wherein said dehydrated vegetative matter is obtained from a species other than *Camellia sinensis,* preferably wherein said beverage composition is herbal tea, more preferably rosehip tea, chamomile tea, jiaogulan tea, peppermint tea, rooibos tea, ginger tea, ginseng tea, or lemongrass tea.

13. The beverage composition of claim 1, wherein said coffee beans or fragments thereof comprise ground coffee beans.

14. The beverage composition of claim 1, wherein preparing said beverage composition comprises combining said *Bacillus coagulans* bacteria and said one or more non-bacterial ingredients with hot water.

15. The beverage composition of claim 14, wherein said hot water comprises boiling water.

## Patentansprüche

1. Getränkzusammensetzung, die isolierte *Bacillus-coagulans-*Bakterien und einen oder mehrere nicht-bakterielle Inhaltsstoffe umfasst, wobei der eine oder die mehreren nicht-bakteriellen Inhaltsstoffe
(i) ausgewählt sind aus der Gruppe bestehend aus Kaffeebohnen oder Fragmenten davon und Kaffeepulver; oder
(ii) eine dehydrierte vegetative Substanz zum Aufbrühen von Tee umfassen,
wobei die *Bacillus-coagulans-*Bakterien mindestens 85 % Sporen umfassen und wobei die *Bacillus-coagulans*-Bakterie den GBI-30-Stamm (ATCC-Bezeichnungsnummer PTA-6086) umfasst.

2. Getränkzusammensetzung nach Anspruch 1, wobei die isolierten *Bacillus-coagulans-*Bakterien die Form einer Spore, die Form einer vegetativen Zelle oder die Form einer Mischung von vegetativen Zellen und Sporen aufweisen.

3. Getränkzusammensetzung nach Anspruch 1, wobei die isolierten *Bacillus-coagulans-*Bakterien die Form eines Pulvers, einer getrockneten Zellenmasse, einer stabilisierten Paste oder eines stabilisierten Gels aufweisen.

4. Getränkzusammensetzung nach Anspruch 1, wobei der nicht-bakterielle Inhaltsstoff mit *Bacillus-coagulans-*Sporen oder gefriergetrockneten vegetativen *Bacillus-coagulans-*Zellen beschichtet oder besprüht ist.

5. Dehydrierte Getränkzusammensetzung nach Anspruch 1, wobei der nicht-bakterielle Inhaltsstoff mit lyophilisierten, sprühgetrockneten, luftgetrockneten oder tiefgefrorenen *Bacillus-coagulans*-Sporen beschichtet oder besprüht ist.

6. Getränkzusammensetzung nach Anspruch 1, wobei *Bacillus-coagulans*-Bakterien in der Form eines sprühgetrockneten Pulvers direkt zu dem einen oder den mehreren nicht-bakteriellen Inhaltsstoffen hinzugefügt sind.

7. Getränkzusammensetzung nach Anspruch 1 (i), wobei die Getränkzusammensetzung Kaffee ist.

8. Getränkzusammensetzung nach Anspruch 7, wobei die Getränkzusammensetzung Instant-Kaffee oder aufbrühbarer Kaffee ist und wobei die Getränkzusammensetzung wahlweise koffeinfreier Kaffee ist.

9. Getränkzusammensetzung nach Anspruch 1, wobei die *Bacillus-coagulans*-Sporen bei Kontakt mit heißer Flüssigkeit, vorzugsweise heißem Wasser, aktiviert werden.

10. Getränkzusammensetzung nach Anspruch 1, wobei die dehydrierte vegetative Substanz aus *Camellia sinensis* erlangt ist, vorzugsweise wobei die dehydrierte vegetative Substanz aus der Gruppe ausgewählt ist, die aus verarbeiteten Blättern, Knospen, Wurzeln und Zweigen besteht.

11. Getränkzusammensetzung nach Anspruch 10, wobei die Getränkzusammensetzung grüner Tee, schwarzer Tee, Oolong-Tee, gelber Tee oder weißer Tee ist, vorzugsweise wobei die Getränkzusammensetzung Instant-Tee oder aufbrühbarer Tee, wahlweise koffeinfreier Tee ist.

12. Getränkzusammensetzung nach Anspruch 1, wobei die dehydrierte vegetative Substanz aus einer Spezies erlangt ist, die eine andere als *Camellia sinensis* ist, vorzugsweise wobei die Getränkzusammensetzung Kräutertee, bevorzugter Hagebuttentee, Kamillentee, Jiaogulan-Tee, Pfefferminztee, Rooibos-Tee, Ingwertee, Ginseng-Tee oder Zitronengrastee ist.

13. Getränkzusammensetzung nach Anspruch 1, wobei die Kaffeebohnen oder Fragmente davon gemahlene Kaffeebohnen umfassen.

14. Getränkzusammensetzung nach Anspruch 1, wobei das Zubereiten der Getränkzusammensetzung ein Kombinieren der *Bacillus-coagulans-*Bakterien und des einen oder der mehreren nicht-bakteriellen Inhaltsstoffe mit heißem Wasser umfasst.

15. Getränkzusammensetzung nach Anspruch 14, wobei das heiße Wasser kochendes Wasser umfasst.

## Revendications

1. Composition pour boisson comprenant des bactéries *Bacillus coagulans* isolées et un ou plusieurs ingrédients non bactériens, dans laquelle lesdits un ou plusieurs ingrédients non bactériens
(i) sont sélectionnés à partir du groupe constitué par des grains de café ou des fragments de ceux-ci et du café en poudre ; ou
(ii) comprennent une matière végétative déshydratée pour infuser du thé,
dans laquelle lesdites bactéries *Bacillus coagulans* comprennent au moins 85 % de spores et dans laquelle ladite bactérie *Bacillus coagulans* comprend une souche GBI-30 (numéro de désignation ATCC PTA-6086).

2. Composition pour boisson selon la revendication 1, dans laquelle lesdites bactéries *Bacillus coagulans* isolées se présentent sous la forme d'une spore, sous la forme d'une cellule végétative ou sous la forme d'un mélange de cellules végétatives et de spores.

3. Composition pour boisson selon la revendication 1, dans laquelle lesdites bactéries *Bacillus coagulans* isolées se présentent sous la forme d'une poudre, d'une masse de cellules sèches, d'une pâte stabilisée ou d'un gel stabilisé.

4. Composition pour boisson selon la revendication 1, dans laquelle ledit ingrédient non bactérien est enrobé ou pulvérisé avec des spores de *Bacillus coagulans* ou des cellules végétatives de *Bacillus coagulans* lyophilisées.

5. Composition pour boisson selon la revendication 1, dans laquelle ledit ingrédient non bactérien est enrobé ou pulvérisé avec des spores de *Bacillus coagulans* lyophilisées, séchées par pulvérisation, séchées à l'air ou congelées.

6. Composition pour boisson selon la revendication 1, dans laquelle des bactéries *Bacillus coagulans* sous la forme d'une poudre séchée par pulvérisation sont ajoutées directement auxdits un ou plusieurs ingrédients non bactériens.

7. Composition pour boisson selon la revendication (1) (i), dans laquelle ladite composition pour boisson est du café.

8. Composition pour boisson selon la revendication 7, dans laquelle ladite composition pour boisson est du café instantané ou du café à infuser, et dans laquelle ladite composition pour boisson est facultativement du café décaféiné.

9. Composition pour boisson selon la revendication 1, dans laquelle lesdites spores de *Bacillus coagulans* s'activent au contact d'un liquide chaud, de préférence de l'eau chaude.

10. Composition pour boisson selon la revendication 1, dans laquelle ladite matière végétative déshydratée est obtenue à partir de *Camellia sinensis,* de préférence dans laquelle ladite matière végétative déshydratée est sélectionnée à partir du groupe constitué par des feuilles, des bourgeons, des racines et des brindilles transformés.

11. Composition pour boisson selon la revendication 10, dans laquelle ladite composition pour boisson est le thé vert, le thé noir, le thé oolong, le thé jaune ou le thé blanc, de préférence dans laquelle ladite composition pour boisson est du thé instantané ou du thé à infuser, facultativement du thé décaféiné.

12. Composition pour boisson selon la revendication 1, dans laquelle ladite matière végétative déshydratée est obtenue à partir d'une espèce autre que *Camellia sinensis,* de préférence dans laquelle ladite composition pour boisson est une tisane, plus préférablement une tisane de cynorrhodon, une tisane à la camomille, un thé au jiaogulan, un thé à la menthe poivrée, un thé au rooibos, un thé au gingembre, un thé au ginseng ou un thé à la citronnelle.

13. Composition pour boisson selon la revendication 1, dans laquelle lesdits grains de café ou fragments de ceux-ci comprennent des grains de café moulus.

14. Composition pour boisson selon la revendication 1, dans laquelle la préparation de ladite composition pour boisson comprend la combinaison desdites bactéries *Bacillus coagulans* et desdits un ou plusieurs ingrédients non bactériens avec de l'eau chaude.

15. Composition pour boisson selon la revendication 14, dans laquelle ladite eau chaude comprend l'eau bouillante.
